# EUROPEAN PATENT SPECIFICATION

(11) **EP 3 090 919 B1**
(45) Date of publication and mention of the grant of the patent: **04.12.2019**
(21) Application number: 14871246.6
(22) Date of filing: 11.12.2014
(51) Int. Cl.: B61L 27/00, B60L 15/40

(54) **SERVICE PLAN CREATION DEVICE**
DIENSTPLANERZEUGUNGSVORRICHTUNG
DISPOSITIF DE CRÉATION DE PLAN DE SERVICE

(30) Priority: 17.12.2013 JP 2013260564
(43) Date of publication of application: 09.11.2016
(73) Proprietor: Kabushiki Kaisha Toshiba, Minato-ku Tokyo 105-8001 (JP)
(72) Inventor: YAMAMOTO, Junko, Tokyo 105-8001 (JP); TONOSAKI, Yukinori, Tokyo 105-8001 (JP); SUZUKI, Tatsunori, Tokyo 105-8001 (JP)
(74) Representative: AWA Sweden AB
(86) International application number: PCT/JP2014/082831
(87) International publication number: WO 2015/093388

(56) References cited:
- EP-A1- 0 554 983
- EP-A2- 0 257 662
- CN-A- 104 192 176
- JP-A- S6 189 165
- JP-A- 2001 278 052
- JP-A- 2004 155 314
- JP-A- 2004 155 314
- US-B1- 6 243 694

## Description

### FIELD

Embodiments described herein invention generally to an operation plan creation device.

### BACKGROUND

Recently, in order to reduce burdens imposed on the environment and to make effective use of resources, there has been a demand for promoting further energy savings in trains which are energy-efficient transportation. Although weight reductions in train cars and improvements in motors and inverters can achieve great deal of energy saving, such improvements require updates in facilities, and therefore will increase costs. Therefore, techniques, which achieve energy savings without accruing as much cost by changing operation plans such as an inter-stop train operation and a train diagram, have been considered.

EP0257662 discloses a method for automatic train operation control between two stations using predetermined control parameters.

US6243694 discloses a system for generating an optimized velocity profile in a rail-based transportation handling controller.
on

In the above-mentioned techniques, it is desirable to generate an operation plan that can achieve reductions in energy consumptions across the entire service section, for example.

### BRIEF DESCRIPTION OF DRAWINGS

FIG. 1 is a diagram illustrating an exemplary configuration of an operation plan creation device according to a first embodiment.
FIG. 2 is a diagram illustrating an example of an operation plan before an operation plan creating function of the operation plan creation device allocates an extension time length, according to the first embodiment.
FIG. 3 is a diagram illustrating an example of the operation plan after the operation plan creating function of the operation plan creation device allocates the extension time length, according to the first embodiment.
FIG. 4 is a diagram for explaining steps for allocating the extension time length by the operation plan creating function of the operation plan creation device according to the first embodiment.
FIG. 5 is a diagram for explaining steps for allocating the extension time length by the operation plan creating function of the operation plan creation device according to the first embodiment.
FIG. 6 is a diagram for explaining steps for allocating the extension time length by the operation plan creating function of the operation plan creation device according to the first embodiment.
FIG. 7 is a flowchart illustrating an example of a process performed by the operation plan creation device according to the first embodiment.
FIG. 8 is a diagram illustrating an exemplary configuration of an operation plan creation device according to a second embodiment.

### DETAILED DESCRIPTION

In general, according to one embodiment, an operation plan creation device comprises a storage unit and an operation plan creation unit. The storage unit is configured to store therein route information, operation information, and car information. The operation plan creation unit comprises an operation plan condition setting module, a run-curve condition setting module, a run-curve creation module, and an operation plan creation module. The operation plan condition setting module is configured to receive car type information, operation type information, operation section information, and a total run time length from a starting station to a destination station, through an input device. The run-curve condition setting module is configured: to retrieve the storage unit based on the operation type information and the operation section information received by the operation plan condition setting module; to identify stop stations to set inter-stop sections for which run-curves are to be created; and to set run time lengths between the stop stations based on an input from the input device. The run-curve creation module is configured: to retrieve the storage unit to extract the route information and the car information based on the car type information and the operation section information received by the operation plan condition setting module; to acquire a first run-curve and a first energy consumption in each of the inter-stop sections based on the extracted route information and car information and the inter-stop sections set by the run-curve condition setting module; to correct, when a total extension time length is set, the run time lengths set by the run-curve condition setting module based on the total extension time length; and to acquire a second run-curve based on the corrected run time lengths. The operation plan creation module is configured: to acquire the total extension time length based on the total run time length, the run time lengths in the inter-stop sections, and stoppage time lengths included in the operation information stored in the storage unit; to notify the run-curve creation module of the acquired total extension time length; and to create an operation plan based on the second run-curve.

Embodiments will now be explained with reference to some drawings.

### <FIRST EMBODIMENT>

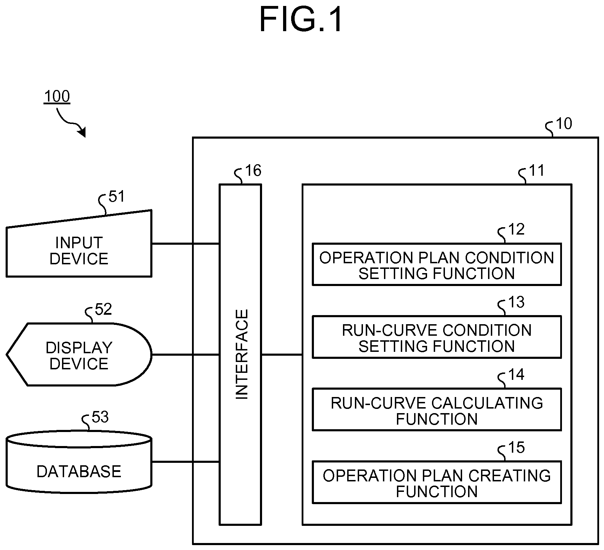

To begin with, an exemplary configuration of an operation plan creation device 100 according to a first embodiment will now be explained with reference to FIGS. 1 to 6.

As illustrated in FIG. 1, the operation plan creation device 100 includes a creation device main unit 10, an input device 51, a display device 52, and a database 53. The database 53 is an example of a "storage unit". The creation device main unit 10 mainly includes an operation plan creation unit 11 and an interface 16. The input device 51, the display device 52, and the database 53 are connected to the creation device main unit 10 through the interface 16. The operation plan creation unit 11 executes various functions, such as an operation plan condition setting function 12, a run-curve condition setting function 13, a run-curve calculating function 14, and an operation plan creating function (extension time allocating function) 15.

In the exemplary configuration illustrated in FIG. 1, the database 53 is externally connected to the creation device main unit 10. However, the database 53 may be internally installed in the creation device main unit 10. In a configuration in which the database 53 is installed internally, the database 53 is connected to the operation plan creation unit 11 through an internal bus instead of through the interface 16 for connecting to external devices.

The database 53 stores therein various types of data required in calculating a run-curve. The data mainly includes route information, operation information, and car information. These pieces of information include the following items.
(1) Route information: for example, the locations of stations, gradients, curves, boundaries between block sections, speed limitations, and overhead wire voltages;
(2) Operation information: for example, operation types, stop stations, and stoppage time lengths at respective stations; and
(3) Car information: for example, the weight for each car type, the number of cars in a train, acceleration and deceleration characteristics, and highest speeds.

The operation plan condition setting function 12 executes a process of setting operation plan conditions based on information that is entered through the input device 51, such as a mouse or a keyboard, or selected from and entered through a selection menu displayed on the display device 52, and is received through the interface 16. Examples of the operation plan condition include a car type, an operation type, an operation section, and a total run time length. The operation section represents a section from a starting station to a destination station for which a train diagram is created. The total run time length represents the run time for which the train travels from the starting station to the destination station.

The operation plan condition may also include, for example, the voltage of the overhead wire in the operation section, a margin to the speed limitation set in the operation section, and the like. The respective standard values are set to the voltage of the overhead wire, the margin, and the like unless corresponding inputs are entered through the input device 51.

The run-curve condition setting function 13 executes a process of setting the conditions to create a run-curve for inter-stop sections within an operation section (i.e., run-curve conditions). Specifically, the run-curve condition setting function 13 retrieves the database 53 based on the operation section and the operation type set by the operation plan condition setting function 12, and identifies the stop stations corresponding to the operation type among the stations included in the operation section. The run-curve condition setting function 13 then sets, based on the identified stop stations, inter-stop sections for which run-curves are to be created. In other words, the run-curve condition setting function 13 identifies, as a target for which the run-curve is to be created, a section between two stop stations that is adjacent when the stop stations are arranged in the temporal order.

The run-curve condition setting function 13 also sets, as a run-curve condition, run time lengths for which the train runs across each of the inter-stop sections included in the operation section as well as the inter-stop sections for which the run-curves are to be created. When "run at highest speed", instead of the run time lengths, is designated for the inter-stop sections in the operation section through the input device 51, the run-curve condition setting function 13 does not set any run time length as a run-curve condition.

The run-curve calculating function 14 retrieves the database 53 based on the information of the car type and the operation section set by the operation plan condition setting function 12, and reads out the corresponding car information and route information. Based on the read car information, the route information, the information of the target inter-stop sections for which respective run-curves are to be created, and the information of the run time lengths set by the run-curve condition setting function 13, the run-curve calculating function 14 calculates run-curves (first run-curves) and inter-stop energy consumptions (first energy consumptions) for each inter-stop section. When no run time length is set, the run-curve calculating function 14 calculates a run-curve, an inter-stop energy consumption, and the shortest run time length assuming that the train runs the inter-stop section at the highest speed. The designated run time length or the shortest run time length is referred to as a basic run time length, and the calculated run-curve is referred to as a basic run-curve.

When the run-curve calculating function 14 receives a total extension time length that is determined by the operation plan creating function 15, the run-curve calculating function 14 sets a plurality of inter-stop extension time lengths within the range not exceeding the total extension time length, and calculates run-curves (second run-curves) and respective inter-stop energy consumptions (second energy consumptions) based on corrected run time lengths that are the additions of the respective inter-stop extension time lengths and each of the basic run time lengths of the respective inter-stop sections.

After the run-curve calculating function 14 calculates the run-curves that are based on the respective basic run time lengths, which are the basic run-curves, the operation plan creating function 15 creates an operation plan (basic operation plan) corresponding to the basic run-curves. The basic operation plan is an operation plan created under the assumption that, when the run-curve condition setting function 13 designates "run at highest speed", the train runs each inter-stop section at the highest speed and stops for designated stoppage time lengths at the respective stations. By contrast, when the run-curve condition setting function 13 sets the run time lengths that are entered through the input device 51, the basic operation plan is an operation plan under the assumption that the train runs the inter-stop sections for each entered time length and stops for the designated stoppage time lengths at the respective stations.

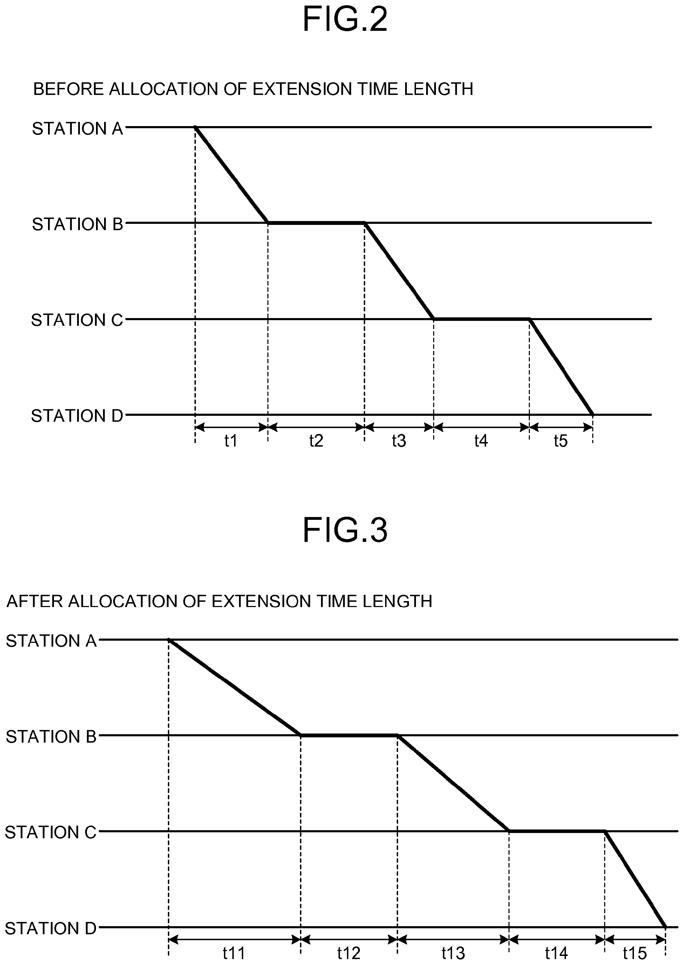

When the basic operation plan is created, the operation plan creation unit 11 sends the basic operation plan to the display device 52 through the interface 16, and the basic operation plan is displayed on the display device 52. FIG. 2 is a diagram illustrating an example of the basic operation plan displayed on the display device 52, and denoting the run time length between the station A and the station B as t1, the stoppage time length at the station B as t2, the run time length between the station B and the station C as t3, the stoppage time length at the station C as t4, and the run time length between the station C and the station D as t5.

Note that the basic operation plan created based on the highest speed may be referred to as a highest-speed basic operation plan, and the basic operation plan created based on the run time lengths designated through the input device 51 may be referred to as a designated basic operation plan.

The operation plan creating function 15 not only creates the basic operation plan, but also calculates the total extension time length. The total extension time length is the time obtained by subtracting the sum of the basic run time lengths of the inter-stop sections and the designated stoppage time lengths at the stations from the total run time length set by the operation plan condition setting function 12. The calculated total extension time length is then provided to the run-curve calculating function 14.

When the run-curve calculating function 14 calculates the inter-stop energy consumptions corresponding to the corrected run time lengths, the operation plan creating function 15 determines inter-stop extension time lengths for the inter-stop sections in such a manner that the total energy consumption consumed across the entire operation section is minimized. The operation plan creating function 15 creates the optimal operation plan in which the inter-stop sections are allocated with the inter-stop extension time lengths in such a manner that the total energy consumption is minimized. The created optimal operation plan is sent to the display device 52 through the interface 16 and is displayed on the display device 52. The process of allocating the inter-stop extension time lengths, and a relationship between an inter-stop energy consumption and an allocated inter-stop extension time length will be described later in detail.

FIG. 3 is a diagram illustrating an example of the optimal operation plan displayed on the display device 52 and created after the inter-stop extension time lengths are allocated so as to minimize the total energy consumption. FIG. 3 denotes the run time length between the station A and the station B as t11, the stoppage time length at the station B as t12, the run time length between the station B and the station C as t13, the stoppage time length at the station C as t14, and the run time length between the station C and the station D as t15.

In the description cited above, the inter-stop extension time lengths are allocated in such a manner that the total energy consumption is minimized, but the embodiment is not limited thereto. Alternatively, a predetermined number of combinations of inter-stop extension time lengths may be selected, as candidates, from combinations capable of achieving the minimum total energy consumption, and a combination achieving comfort in view of accelerations and decelerations may be selected from the selected candidates, for example.

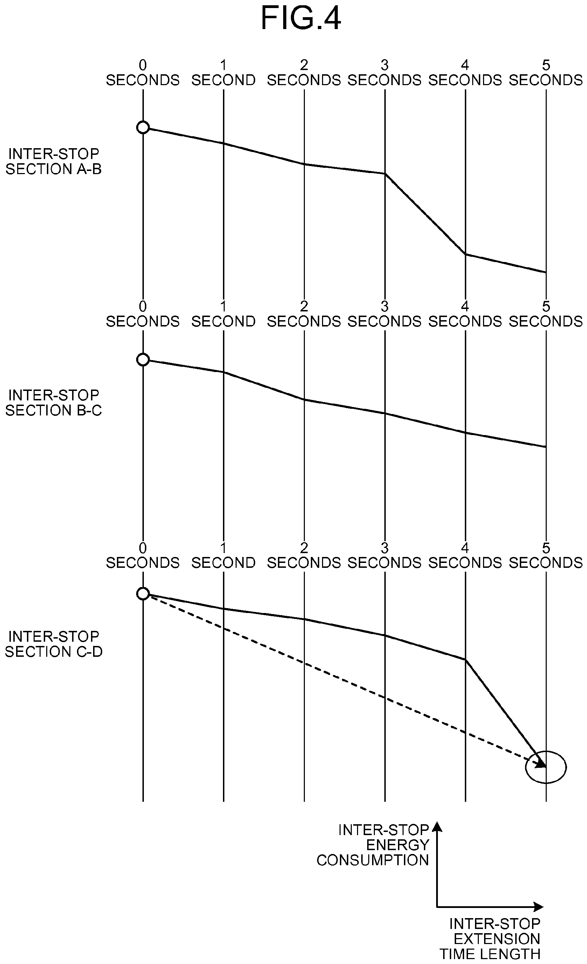

The process of allocating the inter-stop extension time lengths will now be explained in detail with reference to FIGS. 4 to 6.

Explained now is an example in which the total extension time length is ten seconds, and this total extension time length of ten seconds is allocated among the three inter-stop sections from the station A to the station D. It is assumed that, in the example explained below, the upper boundary of the inter-stop extension time length that can be allocated to one inter-stop section is five seconds.

To begin with, after receiving a total extension time length calculated by the operation plan creating function 15, the run-curve calculating function 14 assumes that each one of the inter-stop extension time length is extended in the increment of every given unit time, e.g., one second, within the range equal to or lower than the upper boundary of the time that can be allocated to one inter-stop section, but not exceeding the total extension time length. The run-curve calculating function 14 then calculates the run-curve and the inter-stop energy consumption for each of the assumed inter-stop extension time lengths. In the example mentioned above, the run-curve calculating function 14 assumes the following six patterns, as an inter-stop extension time length to be allocated to each of the inter-stop sections: (1) no time allocation (zero-second allocation); (2) one-second allocation; (3) two-second allocation; (4) three-second allocation; (5) four-second allocation; and (6) five-second allocation. The run-curve calculating function 14 then calculates, for each of the inter-stop sections, six different corrected run time lengths by adding the respective six different inter-stop extension time lengths to the basic run time length. The run-curve calculating function 14 then acquires the run-curves assuming that train runs based on the respective corrected run time lengths, and the run-curve calculating function 14 calculates the respective inter-stop energy consumptions. The run-curve under the above-described assumption (1) is not calculated again, because it has been already calculated as the basic run-curve. The line graphs illustrated in FIGS. 4 to 6 respectively represent a relationship between the different inter-stop extension time lengths and the inter-stop energy consumptions.

The operation plan creating function 15 then selects the combination of the inter-stop section and an inter-stop extension time length that achieve the highest reduction ratio in the inter-stop energy consumption, based on the relationship between the inter-stop extension time lengths and the inter-stop energy consumptions calculated by the run-curve calculating function 14. A reduction ratio in the inter-stop energy consumption herein is the quotient resultant of dividing the amount of reduced inter-stop energy consumption by the inter-stop extension time length, and can be represented as the inclination of the line connecting the nodes in the line graph illustrated in each of FIGS. 4 to 6.

As illustrated in FIG. 4, in the initial state in which no inter-stop extension time length allocated to any of these inter-stop sections, a segment of the line graph presenting the inter-stop section C-D connecting the nodes at zero seconds and five seconds (see the dotted line with an arrow) is inclined by the greatest degree. Therefore, to begin with, the operation plan creating function 15 allocates five seconds of ten seconds of the total extension time length to the inter-stop section C-D. This allocation causes the allocable total extension time length to be reduced by five seconds from ten seconds to five seconds. Consequently, since the inter-stop extension time length for the inter-stop section C-D reaches the upper boundary, the remaining five seconds of the total extension time length is allocated to one or both of the inter-stop section A-B and the inter-stop section B-C.

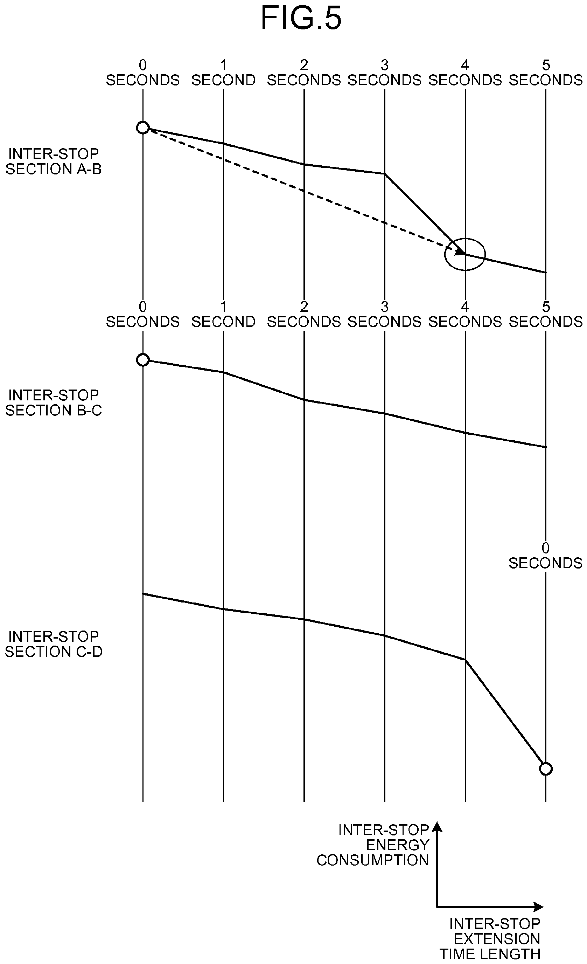

As illustrated in FIG. 5, after the inter-stop extension time lenght of five seconds is allocated to the inter-stop section C-D, a segment of the line graph presenting the inter-stop section A-B connecting the nodes at zero seconds and four seconds (see the dotted line with an arrow) is inclined by the greatest degree. Therefore, the operation plan creating function 15 allocates four seconds out of the remaining five seconds of the total extension time length to the inter-stop section A-B. This allocation causes the allocable total extension time length to be reduced by four seconds from five seconds to one second.

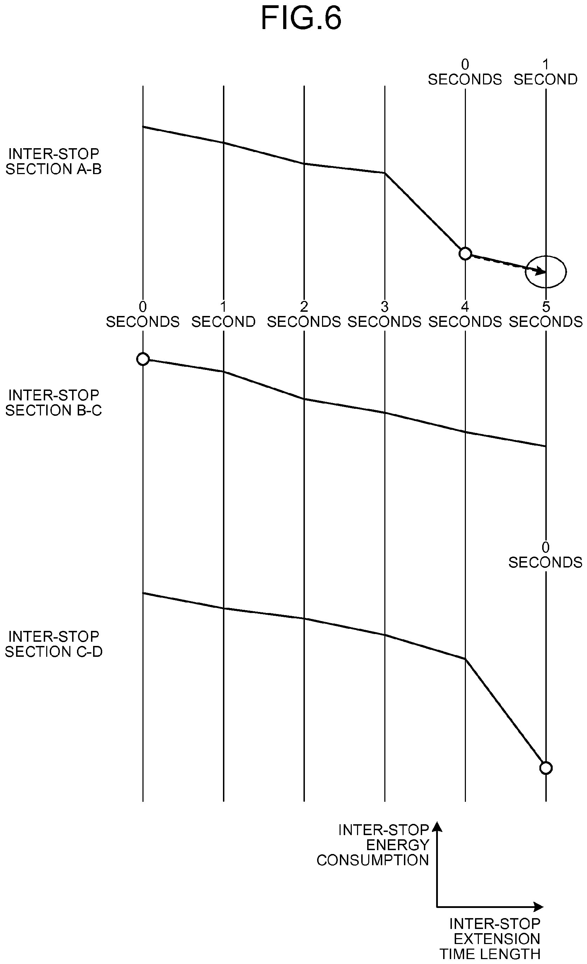

As illustrated in FIG. 6, after the inter-stop extension time length of four seconds is allocated to the inter-stop section A-B, there is only remaining one second of the total extension time length. Therefore, in this case, only one second at the maximum can be allocated to the inter-stop section B-C. Comparing the segment of the line graph presenting the inter-stop section A-B connecting the node at zero seconds (i.e., at four seconds in a case where the inter-stop extension time length has not been allocated) and the node at one second (i.e., at five seconds in a case where the inter-stop extension time length has not been allocated) with the segment of the line graph presenting the inter-stop section B-C connecting the node at zero seconds and the node at one second, the former segment is inclined by the greatest degree (see the dotted line with an arrow). Therefore, the operation plan creating function 15 allocates the remaining one second of the total extension time length to the inter-stop section A-B. As a result, to the inter-stop section A-B, five seconds of the inter-stop extension time length is allocated in total, including the inter-stop extension time length of four seconds having been previously allocated (see FIG. 5). This allocation causes the allocable total extension time length reaches zero seconds, and therefore the process is ended.

By allocating the extension time lengths to the inter-stop sections according to the above-described process, the total energy consumption consumed across the entire operation section is minimized.

Meanwhile, the creator of the operation plan may set (input) a time allowance as an operation plan condition so that a delay of the train operation in an inter-stop section is not propagated to the next inter-stop section. This input of the time allowance is received, for example, after the basic operation plan as illustrated in FIG. 2 is displayed on the display device 52. When the time allowance is entered, the operation plan creating function 15 sets, as the total extension time length, a time length obtained by subtracting the sum of the stoppage time lengths, the basic run time lengths, and the time allowance from the total run time length. The operation plan creating function 15 then allocates the set total extension time length to the inter-stop sections so as to minimize the total energy consumption. Meanwhile, when an input indicating that "no time allowance set" is entered, the operation plan creating function 15 allocates the total extension time length, which is obtained by subtracting the sum of the stoppage time lengths and the basic run time lengths from the total run time length, to the inter-stop sections.

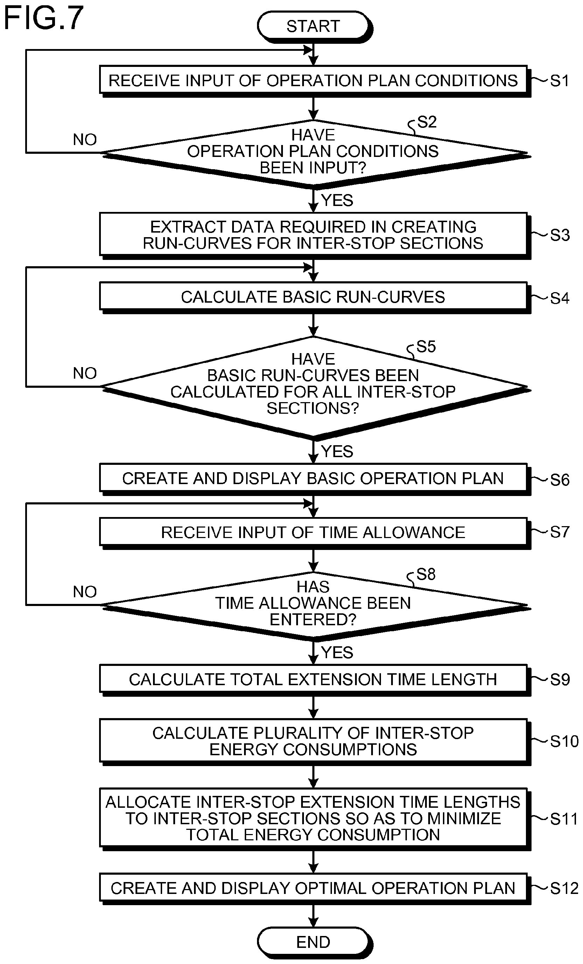

An example of the process of creating and displaying the operation plan, performed by the operation plan creation device 100 according to the first embodiment will now be explained with reference to FIG. 7.

In this process flow as illustrated in FIG. 7, the operation plan creation unit 11 executes a process of receiving inputs of operation plan conditions (e.g., a car type, an operation type, an operation section, and total run time length) through the input device 51 at Step S1, and the process is shifted to Step S2.

At Step S2, the operation plan condition setting function 12 executes a process of determining whether the input of the operation plan conditions through the input device 51 has been completed. If the operation plan condition setting function 12 determines that the input of the operation plan conditions has not been completed at Step S2, the operation plan condition setting function 12 shifts the process back to Step S1. If the operation plan condition setting function 12 determines that the input of the operation plan conditions has been completed at Step S2, the operation plan condition setting function 12 shifts the process to Step S3.

When the inputs of the operation plan conditions are completed, the run-curve condition setting function 13 and the run-curve calculating function 14 retrieve the database 53 based on the input operation plan conditions, extract the data required in creating run-curves (such as the route information, the operation information, and the car information) in addition to the entered operation plan conditions, and set the run-curve conditions at Step S3. In other words, the run-curve condition setting function 13 retrieves the database 53 and identifies the stop stations based on the input operation section and the operation type information; and the run-curve calculating function 14 retrieves the database 53 based on the input car type and operation section information, and extracts the matching car information and route information. When this process is completed, the process is shifted to Step S4.

At Step S4, based on the run time lengths (designated run time lengths) entered through the input device 51, the car information and the route information extracted at Step S3, and the stop station information identified by the run-curve condition setting function 13, the run-curve calculating function 14 calculates the run-curve (basic run-curve) and the energy consumption assuming that the train runs for the entered run time length in one of the inter-stop sections in the operation section. Meanwhile, if the "run at highest speed" is designated through the input device 51, the run-curve calculating function 14 calculates the run-curve and the energy consumption assuming that train runs the inter-stop section at the highest speed. The process is then shifted to Step S5, and the process at Step S4 is repeated until the basic run-curve is calculated for each inter-stop section set by the run-curve condition setting function 13.

If it is determined that the basic run-curve has been calculated for each inter-stop section at Step S5, the process is shifted to Step S6, and the run-curve calculating function 14 creates the basic operation plan based on the basic run-curves for all the calculated inter-stop sections. The basic operation plan created at this time becomes a highest-speed basic operation plan when the highest speed is used as a condition, and becomes a designated basic operation plan when the run time length designated through the input device 51 is used as the condition. The basic operation plan created in this manner is represented in the format illustrated in FIG. 2 as mentioned above, and the operation plan creation unit 11 displays this basic operation plan on the display device 52. The process is then shifted to Step S7.

At Step S7, the operation plan creating function 15 waits for an input including an item that relates to the presence of the setting of the time allowance for preventing a delay in the train operation in any one of the inter-stop sections from propagating to the next inter-stop section in the operation section.

At Step S8, the operation plan creating function 15 executes a process of determining whether the time allowance is entered through the input device 51. At Step S8, if the operation plan creating function 15 determines that the time allowance has not been entered, the process is shifted back to Step S7. If the operation plan creating function 15 determines that the time allowance or "no setting of time allowance" has been entered at Step S8, the process is shifted to Step S9.

At Step S9, the operation plan creating function 15 executes a process of calculating the total extension time length. The total extension time length herein means that the time obtained by subtracting the sum of the train stoppage time lengths at all of the respective stations, the basic run time lengths, and the time allowance from the total run time length. Meanwhile, if the time allowance is unset, that is, if "no setting of time allowance" is entered, the operation plan creating function 15 calculates the total extension time length by subtracting the sum of the basic run time lengths and the stoppage time lengths from the total run time length. The process is then shifted to Step S10.

At Step S10, the run-curve calculating function 14 obtains a plurality of corrected run time lengths by adding a plurality of inter-stop extension time lengths to each of the basic run time lengths within the range not exceeding the total extension time length, and calculates a plurality of run-curves and a plurality of inter-stop energy consumptions to be consumed in the inter-stop section based on the corrected run time lengths. Specifically, to begin with, the run-curve calculating function 14 calculates a plurality of inter-stop extension time lengths (zero seconds to five seconds) that can be allocated to each of the inter-stop sections, within the range equal to or below the upper boundary (five seconds in the example illustrated in FIGS. 4 to 6) and the total extension time length (ten seconds in the example illustrated in FIGS. 4 to 6). The run-curve calculating function 14 then calculates a plurality of run-curves and a plurality of inter-stop energy consumptions corresponding to the calculated inter-stop extension time lengths. The process is then shifted to Step S11.

At Step S11, the operation plan creating function 15 executes a process of allocating the inter-stop extension time lengths to the respective inter-stop sections in such a manner that the total energy consumption consumed in the entire operation section is minimized. Specifically, the operation plan creating function 15 executes a process of allocating the total extension time length to the inter-stop sections according to the steps explained above with reference to FIGS. 4 to 6, based on the inter-stop energy consumptions corresponding to the inter-stop extension time lengths acquired by the run-curve calculating function 14 through the process at Step S10. The process is then shifted to Step S12.

At Step S12, the operation plan creating function 15 creates the optimal operation plan as illustrated in FIG. 3, for example, based on the inter-stop extension time lengths allocated to the inter-stop sections in a manner minimizing the total energy consumption through the process at Step S11. The operation plan creation unit 11 then displays the created optimal operation plan on the display device 52. The process is then ended.

As explained above, in the first embodiment, the run-curve calculating function 14 is configured: to acquire a plurality of corrected run time lengths obtained by adding the inter-stop extension time lengths each with a different length to the basic run time length corresponding to each of the inter-stop sections; and to calculate the inter-stop energy consumptions corresponding to the corrected run time lengths. In addition, the operation plan creating function 15 is configured to determine the inter-stop extension time lengths to be allocated to the inter-stop sections based on a relationship between the inter-stop extension time lengths having different lengths and the inter-stop energy consumptions which are calculated by the run-curve calculating function 14, so that the total energy consumption consumed across the entire operation section is minimized when the total extension time length is allocated across the inter-stop sections. With this configuration, it is possible to generate the optimal operation plan achieving high energy consumption efficiency.

### <SECOND EXAMPLE>

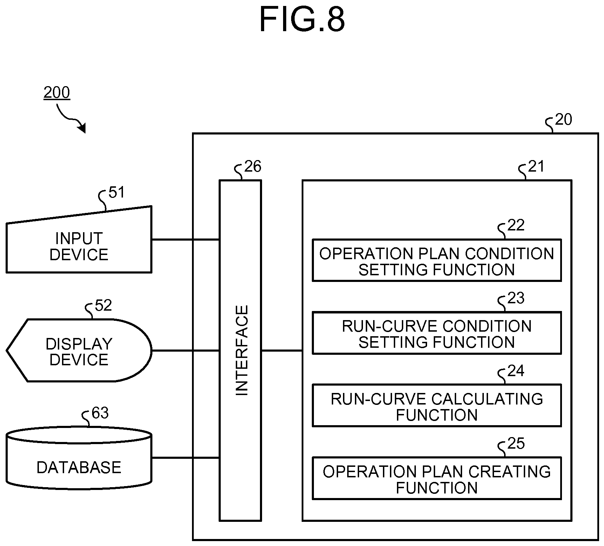

An operation plan creation device 200 according to a second example will now be explained with reference to FIG. 8. The second example is different from the first embodiment in that a relationship between the allocation reference times (which correspond to a plurality of inter-stop extension time lengths having different lengths in the first embodiment) and the inter-stop energy consumptions is stored in a database 63 in advance.

As illustrated in FIG. 8, the operation plan creation device 200 according to the second example includes a creation device main unit 20 having an operation plan creation unit 21, in the same manner as the operation plan creation device 100 according to the first embodiment. The operation plan creation unit 21 includes, as the functional modules, an operation plan condition setting function 22, a run-curve condition setting function 23, a run-curve calculating function 24, and an operation plan creating function 25. The operation plan creation unit 21 is connected to the input device 51, the display device 52, and the database 63 through an interface 26. The database 63 is an example of the "storage unit".

In the second example, the operation plan creating function 25 calculates the total extension time length by subtracting the sum of the basic run time lengths of the respective inter-stop sections and the stoppage time lengths at the respective stations from the total run time length across the operation section. The operation plan creating function 25 then allocates the calculated total extension time length to the inter-stop sections in such a manner that the total energy consumption consumed across the entire operation section is minimized. Meanwhile, if the time allowance is set as explained in the first embodiment, the sum to be subtracted from the total run time length is the sum of the basic run time lengths of the respective inter-stop sections, the stoppage time lengths at the respective stations, and the time allowance corresponding to the inter-stop sections. The basic run time lengths of the inter-stop sections, which are used in calculating the total extension time length, are calculated based on the run-curves calculated by the run-curve calculating function 24 based on the run-curves being calculated under the conditions set by the operation plan condition setting function 22, the run-curve condition setting function 23, and the like.

In the second example, as described above, the database 63 stores therein, in advance, the relationship between the allocation reference time lengths having different lengths, and the inter-stop energy consumptions consumed in the respective inter-stop sections when the respective allocation reference time lengths are allocated. The operation plan creating function 25 sequentially repeats, within the range in which the sum of the allocated allocation reference time lengths is equal to or less than the total extension time length, a process of: selecting the combination of an inter-stop section and the allocation reference time length for maximizing the reduction degree of the inter-stop energy consumption based on the mapping relations read out from the database 63; and allocating the selected allocation reference time length to the selected inter-stop section. With this configuration, also in the second example, similarly to the first embodiment, it is possible to allocate the total extension time length to the inter-stop sections so as to minimize the total energy consumption consumed across the entire operation section.

As a result, it is possible to generate the optimal operation plan capable of reducing the total energy consumption consumed across the entire operation section.

The operation plan creation device according to the above-described examples has a hardware configuration that uses a general computer, and the control program executed by the operation plan creation device is stored in a computer-readable recording medium (e.g., a compact disc read-only memory (CD-ROM), a flexible disk (FD), a compact disc recordable (CD-R), or a digital versatile disc (DVD)), as a file in an installable or executable format to be provided. The control program may be stored in a computer connected to a network such as the Internet, and provided or distributed over the network. The control program may also be provided incorporated in a ROM or the like in advance.

While certain examples have been described, these examples have been presented by way of example only, and are not intended to limit the scope of the inventions. Indeed, the novel examples described herein may be embodied in a variety of other forms; furthermore, various omissions, substitutions and changes in the form of the examples described herein may be made as long as they fall within the scope of the accompanying claims. The accompanying claims are intended to cover such forms or modifications.

## Claims

1. An operation plan creation device (100, 200) comprising:
a storage unit (53, 63), such as a database, configured to store therein route information, operation information, and car information; and
an operation plan creation unit (11, 21) comprising:
an operation plan condition setting module (12, 22) configured to receive car type information, operation type information, operation section information, a total run time length from a starting station to a destination station, and a time allowance to prevent a delay of a train operation in one of inter-stop sections from propagating to a next one of the inter-stop sections, through an input device (51),wherein said module includes an operation plan condition setting function, a run-curve condition setting function, a run-curve calculating function, and an operation plan creating function,
a run-curve condition setting module (13, 23) configured:
to retrieve from the storage unit (53, 63) based on the operation type information and the operation section information received by the operation plan condition setting module (12, 22);
to identify stop stations to set the inter-stop sections for which run-curves are to be created; and
to set run time lengths between the stop stations based on an input from the input device (51) ;
a run-curve creation module (14, 24) configured:
to retrieve the storage unit (53, 63) to extract the route information and the car information based on the car type information and the operation section information received by the operation plan condition setting module (12, 22);
to acquire a first run-curve and a first energy consumption in each of the inter-stop sections based on the extracted route information and car information and the inter-stop sections set by the run-curve condition setting module (13, 23);
to correct, when a total extension time length is set, the run time lengths set by the run-curve condition setting module (13, 23) based on the total extension time length; and
to acquire a second run-curve and a second energy consumption in each of the inter-stop sections based on the corrected run time lengths; and
an operation plan creation module (15, 25) configured:
to acquire the total extension time length by subtracting the run time lengths in the inter-stop sections, stoppage time lengths at the stop stations included in the operation information, and time allowances in the inter-stop sections from the total run time length;
to notify the run-curve creation module (14, 24) of the acquired total extension time length; and
to create an operation plan that minimize a total energy consumption from the starting station to the destination station, based on the second run-curve and the second energy consumption, wherein
when the total extension time length is set, the run-curve creation module (14, 24) acquires a plurality of patterns of inter-stop extension time lengths having a different time length and being allocated to the inter-stop sections within a range of the total extension time length, and acquires a plurality of patterns of second run-curves and second energy consumptions corresponding to the plurality of patterns of the inter-stop extension time lengths on the assumption that each of the patterns of the inter-stop extension time lengths is allocated to the inter-stop sections, and
**characterized in that**
the operation plan creation module selects a combination of the inter-stop extension time lengths and the inter-stop sections that achieves the highest reduction ratio in an energy consumption based on a relationship between the plurality of patterns of the inter-stop extension time lengths and the second energy consumptions, and creates the operation plan based on the second run-curve corresponding to the selected combination.

2. The operation plan creation device (100, 200) according to claim 1, wherein the run-curve creation module (14, 24) is configured to acquire, when an upper boundary of an inter-stop extension time length is set, the plurality of inter-stop extension time lengths within a range of the total extension time length and the upper boundary.

3. The operation plan creation device (100, 200) according to claim 1, wherein
the storage unit (53,63) is further configured to previously store therein information representing the relationship between the plurality of patterns of the inter-stop extension time lengths and the second energy consumptions, and
the run-curve creation module (14, 24) is configured to retrieve the storage unit (53, 63) based on the inter-stop extension time lengths that are acquired based on the total extension time length, and to acquire the second energy consumptions corresponding to the inter-stop extension time lengths.

## Patentansprüche

1. Betriebsplanerzeugungsvorrichtung (100, 200), umfassend:
eine Speichereinheit (53, 63), wie etwa eine Datenbank, die konfiguriert ist, um darin Routeninformationen, Betriebsinformationen und Automobilinformationen zu speichern; und
eine Betriebsplanerzeugungseinheit (11, 21), umfassend:
ein Betriebsplanbedingungsfestlegungsmodul (12, 22), das konfiguriert ist, Automobiltypinformationen, Betriebstypinformationen, Betriebsabschnittsinformationen, eine Gesamtlaufzeitlänge von einer Startstation zu einer Zielstation, und eine erlaubte Zeit, um zu verhindern, dass eine Verzögerung eines Zugbetriebs in einem der Zwischenstoppabschnitte zu einem nächsten der Zwischenstoppabschnitte fortschreitet, über eine Eingabevorrichtung (51) zu empfangen, wobei das Modul eine Betriebsplanbedingungs-Festlegungsfunktion, eine Laufkurvenbedingungs-Festlegungsfunktion, Laufkurvenberechnungsfunktion, und eine Betriebsplanerzeugungsfunktion aufweist,
ein Laufkurvenbedingungs-Festlegungsmodul (13, 23), das konfiguriert ist:
zum Abrufen aus der Speichereinheit (53, 63) basierend auf den Betriebstypinformation und den Betriebsabschnittsinformation, die von dem Betriebsplanbedingungs-Festlegungsmodul (12, 22) empfangen werden;
zum Identifizieren von Stoppstationen, um die Zwischenstoppabschnitte festzulegen, für die Laufkurven erzeugt werden sollen; und
zum Festlegen von Laufzeitlängen zwischen den Stoppstationen basierend auf einer Eingabe von der Eingabevorrichtung (51);
ein Laufkurvenerzeugungsmodul (14, 24), das konfiguriert ist:
zum Abrufen der Speichereinheit (53, 63) zum Extrahieren der Routeninformationen und der Automobilinformationen basierend auf den Automobiltypinformationen und den Betriebsabschnittinformationen, die von dem Betriebsplanbedingungsfestlegungsmodul (12, 22) empfangen werden;
zum Erfassen einer ersten Laufkurve und eines ersten Energieverbrauchs in jedem der Zwischenstoppabschnitte basierend auf den extrahierten Routeninformationen und Automobilinformationen und den Zwischenstoppabschnitten, die durch das Fahrkurvenbedingungs-Festlegungsmodul (13, 23) festgelegt werden;
zum Korrigieren, wenn eine Gesamtverlängerungszeitlänge festgelegt ist, der durch das Laufkurvenbedingungsfestlegungsmodul (13, 23) festgelegten Laufzeitlängen basierend auf der Gesamtverlängerungszeitlänge; und
zum Erfassen einer zweiten Laufkurve und eines zweiten Energieverbrauchs in jedem der Zwischenstoppabschnitte basierend auf den korrigierten Laufzeitlängen; und
ein Betriebsplanerzeugungsmodul (15, 25), das konfiguriert ist:
zum Erfassen der Gesamtverlängerungszeitlänge durch Subtrahieren der Laufzeitlängen in den Zwischenstoppabschnitten, der Stoppzeitlängen an den Stoppstationen, die in den Betriebsinformationen enthalten sind, und der erlauben Zeit in den Zwischenstoppabschnitten von der gesamten Laufzeitlänge;
zum Benachrichtigen des Laufkurvenerzeugungsmoduls (14, 24) über die erfasste Gesamtverlängerungszeitlänge; und
zum Erzeugen eines Betriebsplans, der einen Gesamtenergieverbrauch von der Startstation zu der Zielstation basierend auf der zweiten Laufkurve und des zweiten Energieverbrauchs minimiert, wobei
wenn die Gesamtverlängerungszeitlänge festgelegt ist, das Laufkurvenerzeugungsmodul (14, 24) mehrere Muster von Zwischenstopp-Verlängerungszeitlängen erfasst, die eine unterschiedlichen Zeitlänge haben und den Zwischenstoppabschnitten innerhalb eines Bereichs der gesamten Verlängerungszeitlänge zugewiesen sind, und mehrere Muster von zweiten Laufkurven und zweiten Energieverbräuchen, die den mehreren Mustern der Zwischenstopp-Verlängerungszeitlängen entsprechen, erfasst, unter der Annahme, dass jedes der Muster der Zwischenstopps-Verlängerungszeitlängen den Zwischenstoppabschnitten zugewiesen sind, und
**dadurch gekennzeichnet, dass**
das Betriebsplanerzeugungsmodul eine Kombination der Zwischenstopp-Verlängerungszeitlängen und der Zwischenstoppabschnitte, die das höchste Reduktionsverhältnis in einem Energieverbrauch erreicht, basierend auf einer Beziehung zwischen den mehreren Mustern der Zwischenstopp-Verlängerungszeitlängen und den zweiten Energieverbräuchen auswählt, und den Betriebsplan basierend auf der zweiten Laufkurve, die der ausgewählten Kombination entspricht, erzeugt.

2. Betriebsplanerzeugungsvorrichtung (100, 200) nach Anspruch 1, wobei das Laufkurvenerzeugungsmodul (14, 24) konfiguriert ist, wenn eine obere Grenze einer Zwischenstopp-Verlängerungszeitlänge festgelegt ist, mehrere Zwischenstopp-Verlängerungszeitlängen innerhalb eines Bereichs der gesamten Verlängerungszeitlänge und der oberen Grenze zu erfassen.

3. Betriebsplan-Erzeugungsvorrichtung (100, 200) nach Anspruch 1, wobei
die Speichereinheit (53, 63) ferner konfiguriert ist, darin zuvor Informationen zu speichern, die die Beziehung zwischen den mehreren Mustern der Zwischenstopp-Verlängerungszeitlängen und den zweiten Energieverbräuchen darstellen, und
das Laufkurvenerzeugungsmodul (14, 24) konfiguriert ist, die Speichereinheit (53, 63) basierend auf den Zwischenstopp-Verlängerungszeitlängen die basierend auf der Gesamtverlängerungszeitlänge erfasst werden, abzurufen, und die zweiten Energieverbräuche, die den Zwischenstopp-Verlängerungszeitlängen entsprechen, zu erfassen.

## Revendications

1. Dispositif de création de plan de fonctionnement (100, 200) comprenant :
une unité de mémorisation (53, 63) telle qu'une base de données, configurée pour mémoriser dans celle-ci une information de route, une information d'opération et une information de voiture ; et
une unité de création de plan de fonctionnement (11, 21) comprenant :
un module de réglage de condition de plan de fonctionnement (12, 22) configuré pour recevoir une information de type de voiture, une information de type d'opération, une information de section d'opération, une longueur totale de temps de fonctionnement d'une station de départ à une station de destination et un temps alloué pour empêcher qu'un retard d'une opération de train dans une des sections d'inter-stop se propage à une section suivante des sections d'inter-stop, par l'intermédiaire d'un dispositif de saisie (51), dans lequel ledit module inclut une fonction de réglage de condition de plan de fonctionnement, une fonction de réglage de condition de courbe de régime, une fonctions de calcul de courbe de régime et une fonction de création de plan de fonctionnement,
un module de réglage de condition de courbe de fonctionnement (13, 23) configuré pour :
extraire de l'unité de mémorisation (53, 63) sur la base de l'information de type d'opération et l'information de section d'opération reçue par le module de réglage de condition de plan de fonctionnement (12, 22) ;
identifier des stations d'arrêt pour régler les sections d'inter-stop pour lesquelles des courbes de régime doivent être créées ; et
régler les longueurs de temps de fonctionnement entre les stations d'arrêt sur la base d'une saisie provenant du dispositif de saisie (51) ;
un module de création de courbe de régime (14, 24) configuré pour:
récupérer l'unité de mémorisation (53, 63) afin d'extraire l'information de route et l'information de voiture sur la base de l'information de type de voiture et l'information de section d'opération reçue par le module de réglage de condition de plan de fonctionnement (12, 22) ;
acquérir une première courbe de régime et une première consommation électrique dans chacune des sections d'inter-stop sur la base de l'information de route extraite et l'information de voiture et les sections d'inter-stop réglées par le module de réglage de condition de courbe de régime (13, 23) ;
corriger, lorsqu'une longueur de temps d'extension totale est réglée, la longueur de temps de fonctionnement réglée par le module de réglage de condition de courbe de régime (13, 23) sur la base de la longueur de temps d'extension totale ; et
acquérir une seconde courbe de régime et une seconde consommation électrique dans chacune des sections d'inter-stop sur la base des longueurs de temps de fonctionnement corrigées ; et
un module de création de plan de fonctionnement (15, 25) configuré pour :
acquérir la longueur de temps d'extension totale en soustrayant les longueurs de temps de fonctionnement dans les sections d'inter-stop, les longueurs de temps d'arrêt au niveau des stations d'arrêt incluses dans l'information d'opération et les temps alloués dans les sections d'inter-stop de la longueur de temps de fonctionnement totale ;
notifier au module de création de courbe de régime (14, 24) la longueur de temps d'extension totale acquise ; et créer un plan de fonctionnement qui minimise une consommation électrique totale de la station de départ à la station de destination, sur la base de la seconde courbe de régime et la seconde consommation électrique, dans lequel
lorsque la longueur de temps d'extension totale est réglée, le module de création de courbe de régime (14, 24) acquiert une pluralité de modèles de longueur de temps d'extension d'inter-stop ayant une longueur temporelle différente et les temps alloués aux sections d'inter-stop à l'intérieur d'une plage de la longueur de temps d'extension totale, et acquiert une pluralité de modèles de secondes courbes de régime et une seconde consommation électrique correspondant à la pluralité de modèles des longueurs de temps d'extension d'inter-stop sur le postulat que chacun des modèles de longueur de temps d'extension d'inter-stop est alloué aux sections d'inter-stop, et
**caractérisé en ce que**
le module de création de plan de fonctionnement sélectionne une combinaison des longueurs de temps d'extension d'inter-stop et des sections d'inter-stop qui obtient le rapport de réduction le plus haut dans une consommation électrique sur la base d'une relation entre la pluralité de modèles et longueur de temps d'extension d'inter-stop et des secondes consommations électriques, et créer le plan de fonctionnement sur la base de la seconde courbe de régime correspondant à la combinaison sectionnée.

2. Dispositif de création de plan de fonctionnement (100, 200) selon la revendication 1, dans lequel le module de création de courbe de régime (14, 24) est configuré pour acquérir, lorsqu'une limite supérieure d'une longueur de temps d'extension d'inter-stop est réglée, la pluralité des longueurs de temps d'extension d'inter-stop à l'intérieur d'une plage de la longueur de temps d'extension totale et la limite supérieure.

3. Dispositif de création de plan de fonctionnement (100, 200) selon la revendication 1, dans lequel
l'unité de mémorisation (53, 63) est en outre configurée pour mémoriser précédemment dans celle-ci une information représentant la relation entre la pluralité de modèles des longueurs de temps d'extension d'inter-stop et les secondes consommations électriques, et le module de création de courbe de régime (14, 24) est configuré pour récupérer l'unité de mémorisation (53, 63) sur la base des longueurs de temps d'extension d'inter-stop qui sont acquises sur la base de la longueur de temps d'extension total et acquérir les secondes consommations électriques correspondant aux longueurs de temps d'extension d'inter-stop.
